(19) Europäisches Patentamt / European Patent Office / Office européen des brevets

(11) **EP 2 524 246 B1**

(12) **EUROPEAN PATENT SPECIFICATION**

(45) Date of publication and mention
of the grant of the patent:
**30.04.2014 Bulletin 2014/18**

(21) Application number: **11700920.9**

(22) Date of filing: **14.01.2011**

(51) Int Cl.:
***G01V 1/28*** (2006.01)

(86) International application number:
**PCT/EP2011/050446**

(87) International publication number:
**WO 2011/086149 (21.07.2011 Gazette 2011/29)**

(54) **METHOD TO PROCESS MARINE SEISMIC DATA**

VERFAHREN ZUR VERARBEITUNG VON MEERESBEBENDATEN

PROCÉDÉ DE TRAITEMENT DE DONNÉES SISMIQUES MARINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2010 FR 1050278**

(43) Date of publication of application:
**21.11.2012 Bulletin 2012/47**

(73) Proprietor: **CGGVeritas Services SA
91300 Massy (FR)**

(72) Inventor: **SOUBARAS, Robert
F-91400 Orsay (FR)**

(74) Representative: **Regimbeau
20, rue de Chazelles
75847 Paris Cedex 17 (FR)**

(56) References cited:
**EP-A2- 0 365 270      GB-A- 2 425 839**

- **DAN EBROM, XIUYUAN LI, DWIGHT SUKUP:
"Facilitating technologies for permanently
instrumented oil fields", THE LEADING EDGE,
vol. 19, no. 3, 1 March 2000 (2000-03-01), pages
282-285, XP002590895,**

## Description

### TECHNICAL AREA

The present invention concerns the processing of marine seismic data gathered by means of a seismic streamer towed by a vessel and comprising a plurality of receivers. More particularly, the invention concerns a processing method adapted to the case in which at least part of the data is acquired at different water depths, this being possible by using streamers having at least one portion that is slanted relative to the water surface, or horizontal streamers located at different depths.

### STATE OF THE ART

One widespread technique used for oil or gas prospecting consists of conducting a seismic survey of the subsurface. To image the structure of the subsurface, geophysicians use *"seismic-reflection"* techniques.

In marine seismics, the technique consists of towing behind a vessel:

- one or more energy sources for the emission of an acoustic wave, and
- seismic receivers arranged on cables called streamers positioned horizontally at a constant depth (in the order of $\Delta z = 7.5$ metres) to record the acoustic wave reflected by the interfaces between geological formations.

The source transmits an acoustic wave to the water, by setting up a wave field (compression waves) which propagates coherently and downwardly (downward propagation). When the wave field strikes interfaces between earth formations, called reflectors, it is reflected through the earth and water as far as the seismic receivers (upward propagation) where it is converted into electric signals and recorded.

Seismic receivers are arranged in such manner and in sufficient number for the recorded signals, called traces, to form seismic data which can be used to reconstruct the configuration of the geological layers.

One problem that is encountered is reverberation, and can be explained as follows. A seismic wave reflected by a reflector passes through the water in a generally upward direction. This wave which is called the *"primary"* propagates in the water and passes through the seismic receiver which records its presence.

The wave field continues its progression towards the surface of the water (whose reflection coefficient is -1) where it is reflected downwards. This reflected wave field or *"ghost"* is also propagated in the water and passes through the receivers where it is recorded once again with reverse polarity and a time lag $\Delta t$ which, for waves propagating vertically, is:

$$\Delta t = 2\Delta z/c$$

in which:

- $\Delta t$: the time difference between recording of the primary wave and ghost respectively by the receiver,
- $\Delta z$: the distance between the streamer and the water surface,
- c: the rate of propagation of the wave in water (namely 1500 m/s).

This reverberation of the seismic wave field in the water affects seismic data by amplifying some frequencies and by attenuating others, which makes analysis of underlying earth formations difficult.

In the spectral domain, the ghost corresponds to a filter transfer function:

$$G(f) = 1 - \exp(2j\prod f\Delta t)$$

This transfer function G(f) is zero for multiple frequencies f of $f_n$ in which $f_n = \dfrac{1}{\Delta t} = \dfrac{c/2}{\Delta z} = \dfrac{750}{\Delta z}$

These frequencies for which a transfer function is zero are called *"notches"*. Notches are a particular hindrance since they cannot be deconvoluted. The practice followed in seismics is therefore to position the streamers at a depth such that the first notch lies outside the useable bandwidth. Since 100 Hz is the upper limit of the seismic bandwidth, this leads to positioning the streamers at a depth of around 7.5 m. However, this relatively low depth for streamers has the effect of penalizing recording of the low frequencies (for low frequencies, the function G(f) is proportional to depth $\Delta z$).

Documents US 4 353 121 and US 4 992 992 describe processing methods with which it is possible to eliminate ghosts from recorded seismic data by using a data gathering device comprising a seismic streamer having an angle (in the order of 2 degrees) with the water surface.

With this configuration, it is the operation of data stacking which ensures the elimination of ghosts. The acquired data is effectively redundant, and the processing method comprises a data stacking step to obtain the final image of the subsurface from redundant data. It is during the stacking step that the ghost signals are eliminated since the recordings contributing towards this stack, which were recorded by different receivers, display notches at different frequencies, so that the information that is missing due to the presence of a notch on one seismic receiver is obtained from another receiver.

Document US 4,353,121 describes a processing method based on the following steps:

- determining the common depth point,

- 1D extrapolation (one-dimensional) on a horizontal surface (called datuming),
- correction for Normal MoveOut (NMO);
- data stacking.

Datuming is a processing method in which, using the data from N seismic receivers Rn of positions ($x_n$, $z_n$) where n=1,..N, a synthesis is made of the data that would have been recorded by the seismic receivers if they had been placed at the same horizontal positions $x_n$ but at one same constant reference depth z0 for all the seismic receivers.

Datuming is said to be 1D if it is assumed that the seismic waves propagate vertically. In this case, the method is limited to applying a static shift to each time recording recorded by a given seismic receiver, this static shift corresponding to the time of vertical propagation between the real depth $z_n$ of the receiver $R_n$ and the reference depth $z_0$.

Also, patent US 4,353,121 describes the method consisting of obtaining a primary stack by using a NMO correction to align reflections, then a ghost stack by aligning the ghost reflections, then of combining the two to obtain an after-stack image with a reinforced single-to-noise ratio.

Similar to US 4,353,121, document US 4,992,992 proposes reconstructing the seismic data which would have been recorded by a horizontal cable, using the seismic data recorded by the cable slanted at an angle relative to the surface of the water.

However, document US, 4,992,992 sets out to take into account non-vertical propagations by replacing the 1D datuming of US 4,353,121 with 2D datuming.

This 2D datuming takes into consideration the fact that wave propagation is not necessarily vertical, contrary to the assumption followed for 1D datuming such as proposed in US 4,353,12.

More specifically, US 4,992,992 describes a processing method which, using data recorded by the N receivers $R_n$ of index n+1,..N lying at a horizontal distance $x_n$ from the source and at a depth $z_n=z_0+z_n tg\alpha$ ($\alpha$ corresponding to the angle between the cable and the water surface, and tg is the tangent trigonometric function), reconstructs the seismic data which would have been recorded by seismic receivers located at the same horizontal positions $x_n$ but at one same constant reference depth $z_0$ for all the seismic receivers.

To do so, two sets of seismic data reconstructed as if they had been recorded by a horizontal streamer are calculated then stacked after multiplication by a factor.

The first set of data is synthesized assuming that the seismic waves propagate upwards like the primary waves, the second by assuming that the seismic waves propagate downwards like the ghosts.

Upward propagation (up-travelling wave) is defined by propagation angles relative to the horizontal of between 0° and 180°, downward propagation (down-travelling wave) by propagation angles of 180° to 360°.

The methods described in US 4,353,121 and US 4,922,922 are one dimensional (ID) and two-dimensional (2D) seismic processing methods. Yet, said methods are not generalized in three dimensions. Sampling of the sensors in the 3rd dimension is effectively given by the lateral distance between the streamers, in the order of 150 m, which is much larger than the sampling of sensors along the streamers which is in the order of 12.5 m.

One general purpose of the present invention is to provide a 3D seismic processing method which can be used to image the geology of the subsurface, from marine seismic data recorded by seismic receivers of which at least some lie at different water depths, without involving a datuming step and without any restrictions regarding the direction of wave propagation.

PRESENTATION OF THE INVENTION

For this purpose, the invention proposes a method to process marine seismic data gathered by means of at least one seismic streamer towed by a vessel, and comprising a plurality of seismic receivers ($R_1$,..., $R_n$) located at respective water depths ($z_1$, ..., $z_n$) characterized in that it comprises an adapted mirror migration step of said data in which the recordings of the different seismic receivers ($R_1$, ... , $R_n$) at their effective positions are added to the migration, whilst adding the opposite of the same recordings at their mirror positions.

DESCRIPTION OF THE FIGURES

Other characteristics and advantages of the invention will become further apparent from the following description which is solely illustrative and non-limiting and is to be read with reference to the appended drawings in which:

- figure 1 is a schematic illustration of a marine seismic data gathering method;

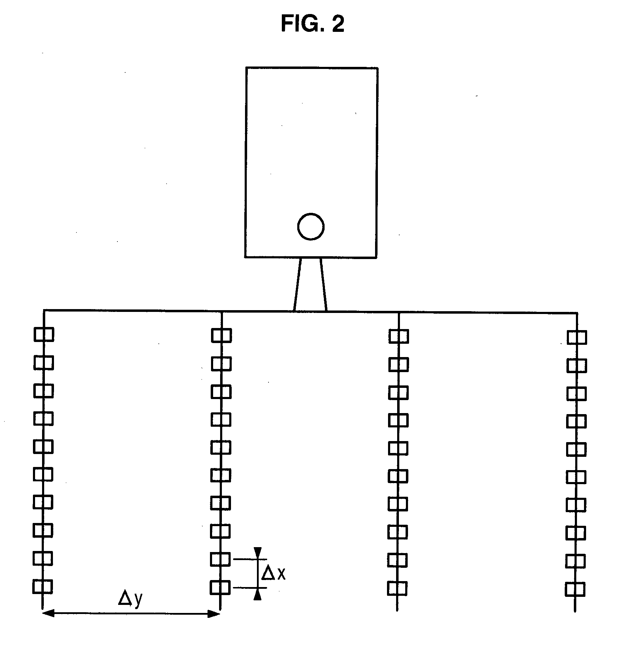

- figure 2 is schematic overhead view of the method illustrated figure 1;
- figure 3 schematically illustrates a mirror migration step of the processing method.

DETAILED DESCRIPTION OF ONE EMBODIMENT

The marine seismic data processing method will now be described with reference to the figures.

*Gathering of marine seismic data*

At the current time, marine seismic data are recorded by means of an acquisition device in which one same source position gives rise to the recording of seismic signals using an array of streamers so as to cover a geographical area.

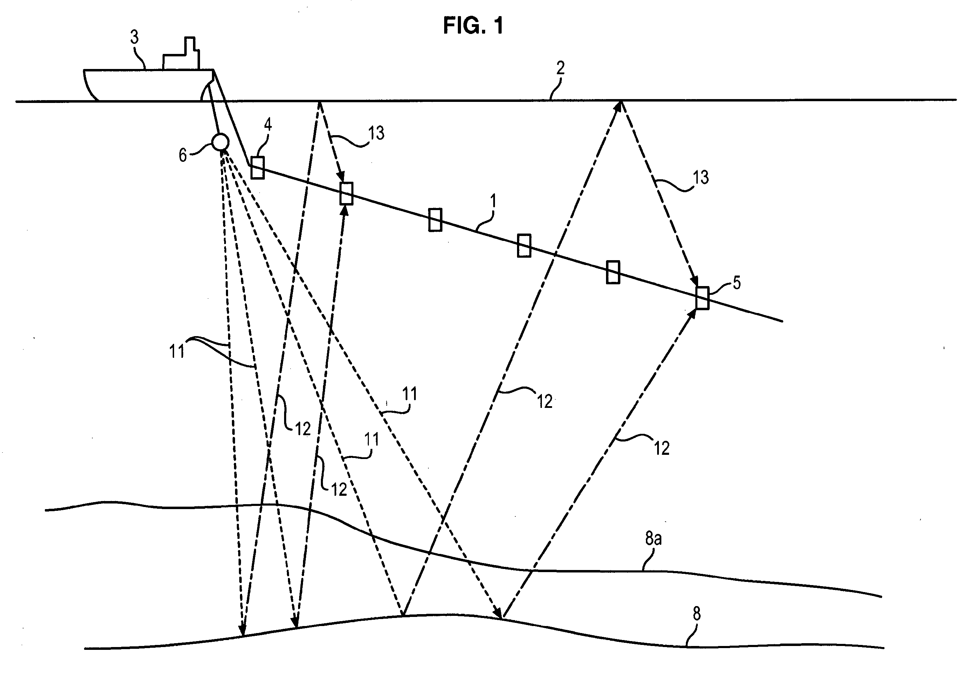

In the acquisition mode illustrated figure 1, each streamer has an angle with the surface of the water, as proposed in documents US 4,353,121 and US 4,992,992.

This angle is identical for all the streamers of the array of streamers, so that they globally extend over one same plane.

Figure 1 shows a body of water extending over a seafloor with a seismic survey vessel 3 on the surface of the water 2.

The vessel 3 tows one or seismic sources 6 intended to emit an acoustic wave into the water. The source 6 may be an array of compressed airguns, a marine vibrator or other types of source known to the person skilled in the art.

The vessel 3 also tows an array of streamers 1 lying at an angle with the surface of the water 2.

Each streamer 1 comprises a plurality of seismic receivers 4, 5, intended to record the acoustic signals emitted by the source 6 after their successive reflections on the interfaces between geological layers - called reflectors. These seismic receivers 4, 5 are hydrophones for example.

The acquisition device operates as follows. The seismic vibration emitted by the seismic source 6 travels along several trajectories 11 and is reflected at the interfaces between materials of different acoustic impedance such as interface 8 - the seafloor is referenced 8a.

A field of reflected waves 12 travels up towards the surface of the water 2 and is recorded by the seismic receivers 4, 5.

The hydrophones 4, 5 at the first and second depths $z_1$, $z_2$ record the reflected waves of the up-travelling wave field.

However, and as indicated in the section "State of the art" the recordings are affected by parasitic reflections: a down-travelling wave field due to reflection of the waves on the surface of the water 2 is superimposed over the up-travelling wave field 12.

The recordings therefore comprise peaks corresponding to surface reflections, or parasitic ghost reflections. The seismic processing method described below makes it possible to use these parasitic ghost reflections to image the subsurface.

*Processing of marine seismic data*

The method described below uses 3D migration per shot point with which it is possible to obtain a precise image of the subsurface taking accurate account of wave propagation in complex media.

Said migration consists of synthesizing the incident wave from information on the seismic source, and the reflected wave from recorded data.

For conventional migration of *"one-way"* type, the principle is as follows.

The incident wave D (i.e. the wave emitted by the source) is assumed to be down-travelling. This incident wave D(x,y,z,t) is synthesized recursively at depth z, the down-travelling wave being initialized at the depth of the seismic source $z_s$. The incident wave D at every depth $n\Delta z$ is then calculated recursively by calculating the incident wave at depth $z+\Delta z$ from the incident wave at depth z.

Similarly, the reflected wave U(x,y,z,t) is assumed to be up-travelling and is initialized at $z=z_r$ with the data recorded by the seismic receivers (if all the receivers have the same depth). The reflected wave U in the entire volume is then calculated recursively by calculating the up-travelling wave U at depth $z+\Delta z$ from the up-travelling wave at depth z.

The image of the subsurface is calculated by the time cross-correlation of the two volumes D (x,y,z,t) and U(x,y,z,t).

The altimetry i.e. the fact that the source and the receivers may have non-zero depths (and all different) may be taken into account by adding the sources and receivers at z throughout the recursive calculations: for example a receiver at a depth $z_r$ lying between $n\Delta z$ and $(n+1)\Delta z$ is added during the recursive calculation of $U((n+1)\Delta z)$ from $U(n\Delta z)$.

Also, the migration step is appropriately an adapted mirror migration, so-called by analogy with mirror migration and the adapted filter used for signal processing (consisting of convoluting a measurement s(t), perturbed by convolution with a h(t) filter, by h(-t) so as to optimize the signal-to-noise ratio.

For mirror migration, the sea surface is used as mirror: instead of *"sighting"* the seafloor, it is the water surface that is *"sighted"* to see the reflectors located underneath the seismic receivers.

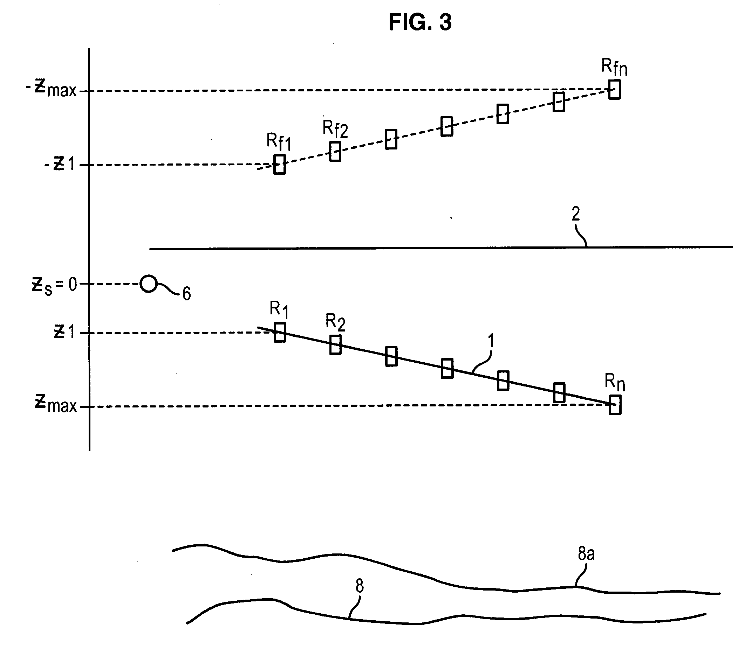

In practice, the seismic data are considered not as having been recorded at the seismic receivers of the streamer, but at an altitude above the water surface equal to the depth of each receiver, as illustrated figure 3.

One mirror imaging technique using mirror migration is described for example in the publication *"Facilitating technologies for permanently instrumented oil fields"* Dan Ebrom, Xiuyuan Li, and Dwight Sukup, The Leading Edge, Vol.19, N°3, pp. 282-285, March 2000.

In this publication, this technique is used for data gathering using seismic receivers located on the seafloor 8a. The principle used is the principle of reciprocity, and fictitious consideration is therefore given to sources on the seafloor (at the receiver positions) and of receivers on the surface (at the source positions).

Mirror imaging consists of using the fictitious ghost source to obtain the image, which can be achieved by placing the fictitious sources at their mirror position relative to the water surface, the source positions ($x_s$, $y_s$, $z_s$,) being changed to ($x_s$, $y_s$, $-z_s$).

Mirror imaging allows better illumination of shallow reflectors.

With respect to adapted mirror migration, applied to data that is acquired by partly slanted streamers, ($x_r$, $y_r$, $z_r$) being the positions of the receivers on the streamers, the reflected wave U (assumed to be up-travelling) is initialized with altimetry migration at an altitude

$-z_{max}$, $z_{max}$ being the maximum depth of the seismic receivers (the maximum of all $z_r$) and altitude 0 corresponding to the water surface.

During the recursive downward movement at z of the wave U between values $-z_{max}$ and 0, the recording of the receiver under consideration is added with a sign change at the mirror positions of the receivers relative to the seafloor i.e. at $(x_r, y_r, -z_r)$.

Continuing downwards for z=0 to $z_{max}$, the recordings of the receiver under consideration are added at their real positions $(x_r, y_r, z_r)$. The remainder of the recursive calculation of U, the generation of the incident wave D (assumed to be down-travelling) and the cross-correlation step between incident and reflected wave to obtain the image, are conducted in similar manner to a conventional one-way migration.

In this manner the image of the subsurface is obtained directly from 3D acquisitions by slanted streamers, taking into account the exact positions of the receivers and the exact 3D propagation of the waves.

The step, during which recordings are added at the mirror positions of the receivers, whose extra cost is negligible, provides strengthening of the signal-to-noise ratio by an image based on the ghost receiver, without doubling the migration calculation time which would be the case if two images were calculated and then stacked as proposed in *"Facilitating technologies for permanently instrumented oil fields".* However, said solution could be applied in one variant of embodiment of the method.

The invention described above allows an image of the subsurface to be obtained directly from data derived from 3D acquisition, gathered using several slanted streamers.

Contrary to the methods described in US 4,353,121 and US 4,992,992 the processing method described above does not comprise any datuming step - consisting of reconstructing seismic data which would have been recorded by a horizontal streamer, using seismic data recorded by the slanted streamer, prior to their migration.

The processing method described above takes into account the angles of propagation at both x and y.

This method also makes it possible to improve the signal-to-noise ratio by using ghost data to reinforce primary reflection data.

If the diversity of depths of the sensors does not permit ghost waves to be fully eliminated, the resulting perturbation on end data is convolution by a filter that is symmetrical (zero phase) and can be deconvoluted (no notch). This deconvolution step is simplified by the fact that it is a zero phase deconvolution.

The description of adapted mirror migration given above concerns the case of 3D migration for *"one-way"* shot point. There are other types of migrations which can be adapted as adapted mirror migration by adding to the calculation of the reflected wave, in addition to the recordings of the receivers at their exact positions, the opposite recordings at their mirror positions.

There is also a 3D migration per shot point called *"Reverse Time Migration"* which does not assume that the incident wave is a down-travelling wave and the reflected wave an up-travelling wave. In this case, the adapted mirror migration can be performed by adding the receivers at their effective position $(x_r, y_r, z_r)$ but by using at the water surface so-called free-surface boundary conditions instead of the usually used absorbing boundary conditions.

The methods described above are not limited to the processing of data acquired using linear streamers of constant slant as shown figure 1. They can just as well be applied to data gathered by means of streamers each comprising several sections of different slants, or by streamers having one or more slanted sections and one or more horizontal sections, or by horizontal streamers located at different depths.

**Claims**

1. Method of processing marine seismic data gathered by means of at least one seismic streamer towed by a vessel and comprising a plurality of seismic receivers $(R_1,...,R_n)$ located at respective water depths $(z_1,...,z_n)$, **characterized in that** it comprises an adapted mirror migration step for said data wherein the recordings of the different seismic receivers $(R_1, ...,R_n)$ at their effective positions are added to the migration whilst adding the opposite of the same recordings at their mirror positions.

2. Method according to the preceding claim, wherein:

   - the calculation of an up-travelling wave is started at an altitude $-z_{max}$, $z_{max}$ being the maximum depth of the seismic receivers,
   - a reverse propagation of the up-travelling wave is made from the initial altitude by a depth recursive calculation in which the up-travelling wave is calculated at a current depth $z+\Delta z$ from the up-travelling wave for the preceding depth z;
   - the receivers whose depth $z_r$ or mirror depth $-z_r$ lies between z and $z+\Delta z$ are added during the calculation.

3. Method according to either of claims 1 and 2, further comprising a propagation step of the down-travelling waves emitted by the source, wherein migration is started at a migration depth equal to the depth of the seismic source $z_s$, and propagation of the down-travelling waves is carried out to obtain down-travelling waves for all depths greater than the depth of the source $z_s$.

4. Method according to claim 3, further comprising a correlation step between the propagated down-travelling wave and the retro-propagated up-travelling wave, for each depth greater than the depth of the source $z_s$.

5. The method according to one of claims 1 to 4, wherein the adapted mirror migration step comprises:

    - recursively calculating an incident wave D emitted by a seismic source at every depth $n\Delta z$ by calculating the incident wave at depth $z+\Delta z$ from the incident wave at depth z, the incident wave being initialized at the depth of the seismic source $z_s$,
    - recursively calculating a reflected wave U by calculating an up-travelling wave U at depth $z+\Delta z$ from an up-travelling wave at depth z, with the data recorded by the seismic receivers,
    - calculating an image of a subsurface by time cross-correlation of the two waves D (x,y,z,t) and U(x,y,z,t),

wherein the step of recursively calculating the reflected wave U comprises :

    - initializing a reflected wave U assumed to be up-travelling with altimetry migration at an altitude zmax, zmax being the maximum depth of the seismic receivers and altitude 0 corresponding to the water surface,
    - during a recursive downward movement at z of the wave U between values -zmax and 0, adding recording of a receiver with a sign change at a mirror position $(x_r, y_r, -z_r)$ of the receiver relative to the seafloor, and
    - continuing downwards for z=0 to zmax, adding a recording of the receiver at its real position $(x_r, y_r, z_r)$.

6. The method according to one of claims 1 to 5, which does not involve a datuming step, datuming being a processing method in which, using data from N seismic receivers Rn of positions $(x_n, z_n)$ where n=1,..N, a synthesis is made of data that would have been recorded by the seismic receivers if they had been placed at the same horizontal positions $x_n$ but at one same constant reference depth z0 for all the seismic receivers.

**Patentansprüche**

1. Verfahren zur Verarbeitung von seeseismischen Daten, die mit Hilfe von mindestens einem seismischen Streamer erhalten werden, der von einem Schiff geschleppt wird und eine Vielzahl von seismischen Aufnehmern $(R_1, ..., R_n)$ umfasst, die sich in entsprechenden Wassertiefen $(z_1, ..., z_n)$ befinden, **dadurch gekennzeichnet, dass** das Verfahren für die Daten einen Schritt der angepassten Spiegelmigration umfasst, bei dem die Aufzeichnungen der verschiedenen seismischen Aufnehmer $(R_1, ..., R_n)$ an ihren effektiven Positionen zur Migration addiert werden, während das Gegenteil derselben Aufzeichnungen an ihren spiegelbildlichen Positionen addiert werden.

2. Verfahren nach dem vorangehenden Anspruch, bei dem:

    - die Berechnung einer sich nach oben bewegenden Welle in der Höhe $-z_{max}$ gestartet wird, wobei $z_{max}$, die maximale Tiefe der seismischen Aufnehmer ist;
    - die Rückwärtsausbreitung der sich nach oben bewegenden Welle von der Anfangshöhe aus durch eine rekursive Tiefenberechnung vorgenommen wird, bei der die sich nach oben bewegende Welle bei einer Strömungstiefe $z + \Delta z$ aus der sich nach oben bewegenden Welle für die vorausgehende Tiefe z berechnet wird;
    - die Aufnehmer, deren Tiefe $z_r$ oder spiegelbildliche Tiefe $-z_r$ zwischen z und $z + \Delta z$ liegt, während der Berechnung hinzugefügt werden.

3. Verfahren nach einem der Ansprüche 1 und 2, das ferner den Schritt der Ausbreitung der von der Quelle ausgesendeten und sich nach unten bewegenden Wellen umfasst, wobei die Migration bei einer Migrationstiefe gestartet wird, die gleich der Tiefe der seismischen Quelle $z_s$ ist, und bei dem die Ausbreitung der sich nach unten bewegenden Wellen ausgeführt wird, um sich nach unten bewegende Wellen für alle Tiefen zu erhalten, die größer als die Quellentiefe $z_s$ sind.

4. Verfahren nach Anspruch 3, ferner umfassend einen Schritt der Korrelation zwischen der sich nach unten ausbreitenden Welle, die sich ausgebreitet hat, und der sich nach oben bewegenden Welle, die sich in der Gegenrichtung ausgebreitet hat, für jede Tiefe größer als die Quellentiefe $z_s$.

5. Verfahren nach einem der Ansprüche 1 bis 4, bei dem der Schritt der angepassten Spiegelmigration umfasst:

    - rekursive Berechnung einer auftreffenden Welle D, die von einer seismischen Quelle an jeder Tiefe $n\Delta z$ ausgesendet wird, durch Berechnung der auftreffenden Welle in der Tiefe $z + \Delta z$ aus der auftreffenden Welle in der Tiefe z, wobei die auftreffende Welle in der Tiefe der seismischen Quelle $z_s$ ausgelöst wird;
    - rekursive Berechnung einer reflektierten Welle U durch Berechnung einer sich nach oben bewegenden Welle U in der Tiefe $z + \Delta z$ aus einer sich nach oben bewegenden Welle in der Tiefe z, mit den Daten, die von den seismischen Aufnehmern aufgezeichnet werden;

- Berechnung eines Bildes eines Untergrundes durch zeitliche Kreuzkorrelation der zwei Wellen D(x,y,z,t) und U(x,y,z,t),

wobei der Schritt der rekursiven Berechnung der reflektierten Welle U umfasst:

- Initialisierung einer reflektierten Welle U unter der Annahme, dass sie sich nach oben bewegt mit Altimetrie-Migration in einer Höhe zmax, wobei zmax die maximale Tiefe der seismischen Aufnehmer ist und die Höhe 0 der Wasseroberfläche entspricht;
- während einer nach unten erfolgenden rekursiven Bewegung der Welle U an der Stelle z zwischen den Werten -zmax und 0, die Zufügung der Aufzeichnung eines Aufnehmers mit Vorzeichenwechsel an der spiegelbildlichen Position $(x_r, y_r, -z_r)$ des Aufnehmers relativ zum Meeresboden; und
- bei der Fortsetzung nach unten für z = 0 bis zmax die Zufügung der Aufzeichnung des Aufnehmers an seiner tatsächlichen Position $(x_r, y_r, z_r)$

**6.** Verfahren nach einem der Ansprüche 1 bis 5, das keinen Datuming-Schritt umfasst, wobei Datuming ein Verarbeitungsverfahren ist, bei dem unter Verwendung der Daten von N seismischen Aufnehmern Rn mit den Positionen $(x_n, z_n)$ mit n = 1, ..., N eine Synthese der Daten durchgeführt wird, die von den seismischen Aufnehmern aufgezeichnet worden wären, falls sie sich an denselben horizontalen Positionen $x_n$ befunden hätten, sondern in derselben konstanten Bezugstiefe z0 für alle seismischen Aufnehmer.

**Revendications**

**1.** Procédé de traitement de données sismiques marines rassemblées au moyen d'au moins une flûte sismique remorquée par un navire et comprenant une pluralité de récepteurs sismiques $(R_1, ..., R_n)$ situés à des profondeurs d'eau $(z_1, ..., z_n)$ respectives, **caractérisé en ce qu'**il comprend une étape de migration miroir adaptée pour lesdites données dans laquelle les enregistrements des différents récepteurs sismiques $(R_1, ..., R_n)$ à leurs positions effectives sont ajoutés à la migration tout en ajoutant l'opposé des mêmes enregistrements à leurs positions miroirs.

**2.** Procédé selon la revendication précédente, dans lequel :

- le calcul d'une onde se propageant vers le haut est débuté à une altitude -$z_{max}$, $z_{max}$ étant la profondeur maximum des récepteurs sismiques,
- une propagation inverse de l'onde se propageant vers le haut est effectuée à partir de l'altitude initiale par un calcul récursif de profondeur dans lequel l'onde se propageant vers le haut est calculée à une profondeur actuelle z + $\Delta$z à partir de l'onde se propageant vers le haut à la profondeur précédente z ;
- les récepteurs dont la profondeur $z_r$ ou la profondeur miroir -$z_r$ se trouve entre z et z + $\Delta$z sont ajoutés pendant le calcul.

**3.** Procédé selon l'une ou l'autre des revendications 1 et 2, comprenant en outre une étape de propagation des ondes se propageant vers le bas émises par la source, dans lequel la migration est débutée à une profondeur de migration égale à la profondeur de la source sismique $z_s$ et une propagation des ondes se propageant vers le bas est effectuée pour obtenir des ondes se propageant vers le bas pour toutes les profondeurs supérieures à la profondeur de la source $z_s$.

**4.** Procédé selon la revendication 3, comprenant en outre une étape de corrélation entre l'onde propagée se propageant vers le bas et l'onde rétro-propagée se propageant vers le haut, pour chaque profondeur supérieure à la profondeur de la source $z_s$.

**5.** Procédé selon l'une des revendications 1 à 4, dans lequel l'étape de migration miroir adaptée comprend :

- le calcul de manière récursive d'une onde incidente D émise par une source sismique à chaque profondeur n$\Delta$z en calculant l'onde incidente à une profondeur z + $\Delta$z à partir de l'onde incidente à une profondeur z, l'onde incidente étant initialisée à la profondeur de la source sismique $z_s$,
- le calcul de manière récursive d'une onde réfléchie U en calculant une onde se propageant vers le haut U à une profondeur z + $\Delta$z à partir d'une onde se propageant vers le haut à une profondeur z, avec les données enregistrées par les récepteurs sismiques,
- le calcul d'une image d'une sous-surface par une corrélation croisée dans le temps des deux ondes D(x,y,z,t) et U(x,y,z,t),

dans lequel l'étape de calcul de manière récursive de l'onde réfléchie U comprend :

- l'initialisation d'une onde réfléchie U supposée se propager vers le haut avec une migration al-

timétrique à une altitude $z_{max}$, $z_{max}$ étant la profondeur maximum des récepteurs sismiques et l'altitude 0 correspondant à la surface de l'eau,
- pendant un mouvement récursif vers le bas à z de l'onde U entre les valeurs -$z_{max}$ et 0, l'ajout d'un enregistrement d'un récepteur avec un changement de signe à une position miroir ($x_r$, $y_r$, -$z_r$) du récepteur par rapport aux fonds océaniques, et
- en poursuivant vers le bas de z = 0 à $z_{max}$, l'ajout d'un enregistrement du récepteur à sa position réelle ($x_r$, $y_r$, $z_r$).

6. Procédé selon l'une des revendications 1 à 5, qui n'implique pas une étape d'étalonnage, l'étalonnage étant un procédé de traitement dans lequel, en utilisant des données provenant de N récepteurs sismiques Rn aux positions ($x_n$, $z_n$) où n = 1, ...N, une synthèse des données qui auraient été enregistrées par les récepteurs sismiques s'ils avaient été placés aux mêmes positions horizontales $x_n$, mais à une seule même profondeur de référence constante z0 pour tous les récepteurs sismiques est effectuée.

FIG. 1

FIG. 2

## FIG. 3

## REFERENCES CITED IN THE DESCRIPTION

**Patent documents cited in the description**

- US 4353121 A
- US 4992992 A

- US 435312 A
- US 4922922 A

**Non-patent literature cited in the description**

- **DAN EBROM ; XIUYUAN LI ; DWIGHT SUKUP.** Facilitating technologies for permanently instrumented oil fields. *The Leading Edge,* March 2000, vol. 19 (3), 282-285